Europäisches Patentamt

(19) European Patent Office

Office européen des brevets

(11) Numéro de publication: **0 240 442 B1**

(12) **FASCICULE DE BREVET EUROPEEN**

(45) Date de publication du fascicule du brevet:
**07.06.89**

(21) Numéro de dépôt: **87420082.7**

(22) Date de dépôt: **25.03.87**

(51) Int. Cl.⁴: **B01L 3/04**

(54) Creuset pour l'analyse thermique d'alliages d'aluminium.

(30) Priorité: **27.03.86 FR 8604655**

(43) Date de publication de la demande:
**07.10.87 Bulletin 87/41**

(45) Mention de la délivrance du brevet:
**07.06.89 Bulletin 89/23**

(84) Etats contractants désignés:
**AT BE CH DE ES GB GR IT LI LU NL SE**

(56) Documents cités:
**FR-A- 2 357 891**

(73) Titulaire: **ALUMINIUM PECHINEY, 23, rue Balzac,
F-75008 Paris Cédex 08(FR)**

(72) Inventeur: **Morice, Jean, 8, rue des Mariniers Bât. 3 Appt
C.112, F-75014 Paris(FR)**
Inventeur: **Perrier, Jean-Jacques, 9, rue Bausset,
F-75015 Paris(FR)**

(74) Mandataire: **Vanlaer, Marcel et al, PECHINEY 28, rue de
Bonnel, F-69433 Lyon Cédex 3(FR)**

## Description

La présente invention a pour objet un creuset pour l'analyse thermique d'alliages d'aluminium, notamment, d'alliages contenant une quantité hypereutectique de silicium.

L'homme de l'art des pièces moulées en alliages d'aluminium utilise principalement des alliages contenant du silicium. Parmi ceux-ci, on distingue les alliages contenant plus de 12,5 % en poids de silicium qualifiés d'hypereutectiques. Quand on mould ces derniers, ils donnent lieu au cours de la solidification, d'abord à la formation de cristaux de silicium dit primaire qui apparaissent à une température dite de solidification commençante, puis à la formation de cristaux eutectiques d'aluminium-silicium.

La taille des cristaux de silicium primaire formés naturellement est relativement grande, ce qui nuit à l'obtention de pièces moulées ayant des propriétés convenables. C'est pourquoi, on procède le plus souvent à un traitement dit d'affinage de l'alliage à l'état liquide en vue de réduire le plus possible la taille de ces cristaux.

Cet affinage peut être obtenu, par exemple, par ajout de cuprophosphore en quantité variable suivant la teneur en silicium et en autres éléments de l'alliage traité.

Mais, cette quantité d'affinant peut varier fortement pour un même alliage en fonction des traitements subis par le métal, du processus de fusion et de la présence de certaines impuretés.

C'est pourquoi, on ajoute généralement un excès d'affinant. Malheureusement, cela a pour effet de diluer l'alliage de sorte que si l'affinage est correct, sa teneur en silicium ne répond plus à la composition souhaitée.

Par ailleurs, l'homme de l'art sait très bien que les agents d'affinage ont un effet fugace, c'est-à-dire qu'il suffit parfois d'attendre quelques minutes entre le moment de son introduction dans l'alliage et le moment de la coulée pour que leur action soit réduite à néant.

Or, dans les ateliers de moulage, une poche d'alliage sert le plus souvent à alimenter l'un après l'autre un grand nombre de moules de sorte que si l'affinage est correct lors de l'alimentation des premiers moules, il devient insuffisant et même inexistant pour les derniers moules.

Il s'avère donc indispensable de pouvoir disposer d'un moyen permettant de connaître l'état d'affinage du bain d'alliage à tout moment afin de pouvoir procéder éventuellement aux ajouts d'affinant nécessaire et d'éviter ainsi de couler des pièces qui ne répondraient pas aux propriétés souhaitées. De même, un moyen permettant de mesurer la teneur exacte en silicium de l'alliage dilué par l'affinant avant la coulée s'impose afin de pouvoir corriger éventuellement cette teneur par un apport complémentaire de silicium.

Certes, le moyen de déterminer la teneur en silicium existe déjà dans toutes les fonderies : il s'agit des creusets d'analyse thermique. De tels creusets ont été décrits dans le brevet français n° 2 357 891 ; ils sont constitués par un cylindre muni d'un fond et réalisés soit entièrement en sable à noyau soit avec une paroi latérale essentiellement métallique ; à l'intérieur de ce cylindre est placée une gaine dans laquelle est enfilée un thermocouple dont l'extrémité sensible entre en contact avec l'alliage à analyser lorsque ce dernier est versé à l'état liquide dans le creuset.

De tels creusets permettent de suivre l'évolution de la température durant la solidification de l'alliage et notamment de connaître la température de solidification commençante Tc qui se manifeste par un changement de pente sur la courbe température-temps. Comme, dans le cas des alliages d'aluminium-silicium hypereutectiques, cette température Tc augmente en fonction d'une teneur croissante en silicium, il semble facile, par comparaison avec des courbes préétablies donnant cette teneur en fonction de Tc de déterminer la quantité de silicium contenue dans l'alliage analysé.

Malheureusement, on a constaté que la taille des cristaux de silicium primaire avait une influence sur Tc. En effet, plus les cristaux sont gros, plus Tc est faible.

Or, comme on l'a vu plus haut, le degré d'affinage des alliages industriels peut varier dans de fortes proportions de même que la teneur en silicium résultant de la dilution par l'affinant. Donc, au moment de l'analyse, la connaissance de Tc ne permettra pas de déterminer exactement la teneur en silicium puisque cette température peut résulter tout aussi bien d'une combinaison forte teneur en silicium-gros cristaux, que d'une combinaison faible teneur en silicium-fins cristaux.

C'est pourquoi la demanderesse a cherché et mis au point un moyen permettant de supprimer l'influence de la taille des cristaux sur Tc de façon à pouvoir déterminer exactement la teneur en silicium et par la même occasion de connaître le degré d'affinage de l'alliage analysé.

Ce moyen consiste en un creuset pour l'analyse thermique d'alliages d'aluminium caractérisé en ce qu'au moins sa paroi latérale est revêtue intérieurement et au moins partiellement d'un film d'agent affinant pour les alliages d'aluminium..

La demanderesse a en effet constaté qu'en utilisant un tel creuset, on obtenait, lors de son remplissage avec l'alliage à analyser, un affinage parfait dudit alliage de sorte que l'influence de la taille des cristaux était complètement neutralisée et que la température Tc mesurée était fonction exclusivement de la teneur en silicium de l'alliage considéré.

Il suffit que ce film, quand il revêt complètement la paroi, ait une épaisseur comprise entre 0,1 et 0,01 mm car une épaisseur plus petite est insuffisante pour réaliser l'affinage alors qu'une épaisseur plus grande s'avère superflue.

Dans le cas d'un revêtement partiel, l'épaisseur est plus grande de manière à avoir une quantité d'affinant équivalente à celle contenue dans le film continu.

Toutefois, l'efficacité de ce revêtement est plus ou moins grande suivant l'agent d'affinage utilisé.

C'est ainsi que le phosphore rouge s'est révélé convenir le mieux à l'invention, notamment, quand il revêt la forme de grains de dimensions inférieures à 100 μm. Un tel agent d'affinage, inutilisable industriellement en raison de la facilité avec laquelle il s'enflamme spontanément et des mauvaises conditions de travail qu'il crée, peut s'appliquer aisément sans risque particulier au niveau d'un creuset en raison des quantités très faibles mises en oeuvre.

Pour permettre l'obtention d'un film régulier, adhérant bien à la paroi du creuset, il est préférable de mélanger le phosphore rouge à un liant tel que, par exemple, le diphosphate d'aluminium en solution dans l'eau à raison de 500 g/l et dans une proportion telle que le rapport de la masse de phosphore à celle du liant soit comprise entre 0,25 et 1, de manière à obtenir un produit semi-liquide au moyen duquel on peut badigeonner la paroi du creuset pour obtenir après séchage entre 100 et 150° C un revêtement adéquat.

Avec un tel creuset, on peut donc connaître la Tc résultant uniquement de l'influence de la teneur en silicium et en déduire, par comparaison avec les valeurs de Tc données par les courbes théoriques Tc en f (% Si et d'autres éléments d'alliages s'il y a lieu) pour un même type d'alliage, la teneur exacte de l'alliage en silicium. Cette teneur peut alors éventuellement être corrigée dans la poche de coulée par ajout d'alliage-mère Al-Si.

On notera au passage qu'une telle méthode très rapide et très simple remplace avantageusement les méthodes sophistiquées de dosage du silicium telles que, par exemple, l'activation neutronique.

De plus, un tel creuset permet également de connaître le degré d'affinage d'un bain d'alliage avant la coulée.

En effet, il suffit pour cela de prendre un échantillon dudit bain, de mesurer sa Tc à la fois dans un creuset classique non revêtu et dans un creuset selon l'invention et de comparer les valeurs obtenues. Si, les températures sont égales, on peut dire que le bain est parfaitement affiné et on peut couler avec l'assurance d'avoir les meilleures propriétés liées à la finesse du grain.

Par contre, si Tc1 dans le creuset classique est inférieure à Tc2 dans le creuset selon l'invention, on en déduit que l'affinage du bain est incorrect et on sait alors qu'il faut ajouter au bain de l'agent affinant en quantité fonction de l'écart de température constaté.

L'invention puet être illustrée à l'aide de l'exemple d'application suivant :

Un alliage d'aluminium-silicium hypereutectique de composition en poids Si 17 % , Cu 4 % , a été échantillonné avant une poche coulée de 2 tonnes et soumis à l'analyse thermique dans un creuset classique et dans un creuset muni sur sa paroi latérale d'un revêtement continu de 0,05 mm d'épaisseur composé de 30 g de phosphore rouge de granulométrie comprise entre 20 et 90 μm pour 70 g d'une solution à 500 g/l de Al2 (HPO4)3.

On a relevé respectivement les températures suivantes :

Tc1 = 607 °C    Tc2 = 640 ° C On en a déduit à partir de Tc2 que la teneur en silicium de l'alliage était de 17 % en poids et à partir de la différence : Tc2 - Tc1 que l'affinage était imparfait. Après avoir rajouté dans le bain 2,5 kg de cuprophosphore à 7 % en poids de phosphore, on a refait les analyses et noté d'une part, une valeur T'c2= 620°C donc inférieure à Tc2, ce qui indique donc une dilution du bain par l'agent d'affinage, d'autre part, une nouvelle valeur T'c1 égale à T'c2 montrant que l'affinage du bain était maintenant parfait.

L'invention trouve son application dans la mesure simultanée de la teneur en silicium et du degré d'affinage des alliages d'aluminium-silicium hypereutectiques.

## Revendications

1. Creuset pour l'analyse thermique d'alliages d'aluminium, caractérisé en ce que au moins sa paroi latérale est revêtue intérieurement et au moins partiellement d'un film d'agent affinant pour alliages d'aluminium.

2. Creuset selon la revendication 1, caractérisé en ce que le film d'agent affinant revêt complètement la paroi et a une épaisseur comprise entre 0,1 et 0,01 mm.

3. Creuset selon la revendication 1, caractérisé en ce que l'agent affinant est le phosphore rouge.

4. Creuset selon la revendication 3, caractérisé en ce que le phosphore est sous forme d'une poudre de granulométrie inférieure à 100 μm.

5. Creuset selon la revendication 3, caractérisé en ce que le phosphore rouge est lié à la paroi au moyen d'une solution de diphosphate d'aluminium à 500 g/l.

6. Creuset selon les revendications 3 et 5, caractérisé en ce que le rapport de la masse de phosphore sur celle du liant est compris entre 0.25 et 1.

7. Procédé d'application du creuset selon la revendication 1 à la mesure de la teneur en silicium des alliages d'aluminium hypereutectiques, caractérisé en ce que l'on mesure la température de solidification commençante de l'alliage dans ledit creuset et la compare à la température lue sur la courbe théorique donnant la température de solidification commençante en fonction de la teneur en silicium pour un alliage du même type.

8. Procédé d'application du creuset selon la revendication 1 à la mesure du degré d'affinage d'alliages aluminium-silicium hypereutectiques, caractérisé en ce que l'on mesure la température de solidification commençante de l'alliage dans un creuset non revêtu et dans un creuset selon l'invention et on compare les valeurs obtenues.

## Claims

1. A crucible for thermal analysis of aluminium alloys characterised in that at least the side wall thereof is covered internally and at least partially with a film of refining agent for aluminium alloys.

2. A crucible according to claim 1 characterised in that the film of refining agent covers the wall completely and is from 0.1 to 0.01 mm in thickness.

3. A crucible according to claim 1 characterised in that the refining agent is red phosphorus.

4. A crucible according to claim 3 characterised in that the phosphorus is in the form of a powder of a granulometry of smaller than 100 µm.

5. A crucible according to claim 3 characterised in that the red phosphorus is bonded to the wall by means of a solution of aluminium diphosphate containing 500 g/l thereof.

6. A crucible according to claims 3 and 5 characterised in that the ratio of the weight of phosphorus to that of the binder is between 0.25 and 1.

7. Process for using the crucible according to claim 1 for measuring the silicon content of hypereutectic aluminium alloys characterised by measuring the incipient solidification temperature of the alloy in said crucible and comparing it to the temperature which is read off on the theoretical curve giving the incipient solidification temperature in dependence on the silicon content for an alloy of the same type.

8. A process for using the crucible according to claim 1 for measuring the degree of refining of hypereutectic aluminium-silicon alloys characterised by measuring the incipient solidification temperature of the alloy in a crucible without a covering and in a crucible according to the invention, and comparing the values obtained.

**Patentansprüche**

1. Tiegel für die thermische Analyse von Aluminiumlegierungen, dadurch gekennzeichnet, daß zumindest seine Seitenwand innen und zumindest teilweise mit einem Aluminiumlegierungen frischenden Mittel überzogen ist.

2. Tiegel nach Anspruch 1, dadurch gekennzeichnet, daß der Film des frischenden Mittels die Wand vollständig überzieht und eine Dicke von 0,1 bis 0,01 mm hat.

3. Tiegel nach Anspruch 1, dadurch gekennzeichnet, daß das frischende Mittel roter Phosphor ist.

4. Tiegel nach Anspruch 3, dadurch gekennzeichnet, daß der Phosphor in Form eines Pulvers mit einer Teilchengröße unter 100 µm vorliegt.

5. Tiegel nach Anspruch 3, dadurch gekennzeichnet, daß der rote Phosphor an die Wand mit einer Aluminiumdiphosphat-Lösung mit einer Konzentration von 500 g/l gebunden ist.

Tiegel nach Anspruch 3 und 5, dadurch gekennzeichnet, daß das Masseverhältnis von Phosphor zu Bindemittel von 0,25 bis 1 beträgt.

7. Verwendung des Tiegels nach Anspruch 1 zur Bestimmung des Siliciumgehalts von übereutektischen Aluminiumlegierungen, dadurch gekennzeichnet, daß die Temperatur der beginnenden Verfestigung der Legierung in dem Tiegel bestimmt und mit der auf der theoretischen Kurve abgelesenen Temperatur verglichen wird, wobei die Temperatur der beginnenden Verfestigung in Funktion des Siliciumgehalts einer Legierung des gleichen Typs erhalten wird.

8. Verwendung des Tiegels nach Anspruch 1 zur Bestimmung des Frischungsgrades von übereutektischen Aluminium-Siliciumlegierungen, dadurch gekennzeichnet, daß die Temperatur der beginnenden Verfestigung der Legierung in einem nicht überzogenen Tiegel und im erfindungsgemäßen Tiegel bestimmt wird und die erhaltenden Werte verglichen werden.